# FASCICULE DE BREVET EUROPEEN

(11) **EP 1 993 949 B1**
(45) Date de publication et mention de la délivrance du brevet: **22.05.2019**
(21) Numéro de dépôt: 07731027.4
(22) Date de dépôt: 22.02.2007
(51) Int. Cl.: C01B 3/00, C01B 6/24, C22C 27/02, C22C 27/06, C22C 1/04, C22C 14/00, B22F 9/02, B22F 9/00, C22C 16/00, H01M 4/38, H01M 8/04082

(54) **MATERIAUX INTERMETALLIQUES PULVERULENTS POUR LE STOCKAGE REVERSIBLE DE L'HYDROGENE**
PULVERFÖRMIGE INTERMETALLISCHE MATERIALIEN ZUR REVERSIBLEN SPEICHERUNG VON WASSERSTOFF
PULVERULENT INTERMETALLIC MATERIALS FOR THE REVERSIBLE STORAGE OF HYDROGEN

(30) Priorité: 23.02.2006 FR 0601615
(43) Date de publication de la demande: 26.11.2008
(73) Titulaire: CENTRE NATIONAL DE LA RECHERCHE SCIENTIFIQUE -CNRS-, 75016 Paris (FR)
(72) Inventeur: CHARBONNIER, Jean, F-38100 Grenoble (FR); DE RANGO, Patricia, F-38610 Gieres (FR); FRUCHART, Daniel, F-38130 Echirolles (FR); MIRAGLIA, Salvatore, F-38000 Grenoble (FR); RIVOIRARD, Sophie, F-38250 Lans En Vercors (FR); SKRYABINA, Natalia, Perm, 614068 (RU)
(74) Mandataire: LLR
(86) Numéro de dépôt international: PCT/FR2007/000321
(87) Numéro de publication internationale: WO 2007/096527

(56) Documents cités:
- WO-A-00/13244
- WO-A-02/071517
- US-A- 4 948 423
- US-A1- 2002 029 820
- US-E- R E34 588
- YUNGFENG ZHU, HONGGE PAN, MIINGXIA GAO, JIANXIN MA, YONGQUAN LEI, QIDONG WANG: "Electrochemical studies on the Ti-Zr-V-Mn-Cr-Ni hydrogen storage electrode alloys" INTERNATIONAL JOURNAL OF HYDROGEN ENERGY, vol. 28, 2003, pages 311-316, XP002403919
- DAN LUPU, ALEXANDRU SORIN BIRIS, ALEXANDRU RADU BIRIS, IOAN MISAN, EMIL INDREA: "Hydrogen absorption and electrode properties of Zr1-xTixV1.2Cr0.3Ni1.5 Laves phases" JOURNAL OF ALLOYS AND COMPOUNDS, vol. 312, 2000, pages 302-306, XP002403920
- YUJUN CHAI, WENYA YIN, ZHIYING LI, XINBO ZHANG, MINSHOU ZHAO: "Structure and electrochemical characteristics of Ti0.25-xZrxV0.35Cr0.1Ni0.3(x=0.05-0.15) alloys" INTERMETALLICS, vol. 13, 2005, pages 1141-1145, XP002403921

## Description

La présente invention a trait au stockage de l'hydrogène à l'échelle industrielle. Elle concerne plus spécifiquement des matériaux qui permettent un stockage réversible d'hydrogène sous la forme d'hydrures métalliques.

L'hydrogène (H₂) est utilisé dans de nombreux domaines industriels, notamment à titre de combustible (par exemple dans des moteurs thermiques ou des piles à combustible), ou bien encore à titre de réactif (typiquement pour des réactions d'hydrogénation). Dans ce cadre, compte tenu de son volume à l'état gazeux et de son explosivité, il est souhaitable que l'hydrogène soit stocké sous une forme assurant un encombrement réduit et un confinement sécuritaire.

L'hydrogène est usuellement stocké sous pression (stockage dit hyperbare à des pressions typiquement de l'ordre de 20 à 70 MPa) ou bien sous forme liquide (à des températures inférieures ou égales à 20.4 K). Ces modes de stockage s'avèrent généralement onéreux, en particulier en termes d'énergie. De plus, ils ne permettent pas de satisfaire pleinement les exigences en matière de sécurité, notamment dans le cas de stockages sous pression.

Plus avantageusement, il a été proposé de stocker l'hydrogène sous la forme d'hydrures. Dans ce cadre, l'hydrogène à stocker est typiquement mis en contact avec un matériau métallique (généralement un alliage) dans des conditions de pression et de température qui induisent une incorporation de l'hydrogène sous forme atomique dans le réseau cristallin, par conversion de l'hydrogène moléculaire H₂ en un hydrure (étape dite de "charge" de l'hydrogène). Pour récupérer l'hydrogène ainsi stocké, on se place dans des conditions de plus faible pression et/ou de température plus élevée, qui favorisent la réaction inverse ("décharge" de l'hydrogène). On peut déterminer dans ce cadre une *"capacité de stockage réversible",* exprimée en pourcentage en masse, qui correspond à la quantité d'hydrogène maximale que peut décharger le matériau de stockage une fois qu'il a été chargé. Pour plus de détails concernant le stockage d'hydrogène sous forme d'hydrures, on pourra notamment se reporter à Hydrogen in Intermetallic Compounds I et II, L. Schlapbach, Springer-Verlag, (1988).

Par rapport aux stockages sous pression ou à très basse température précités, le stockage de l'hydrogène sous forme d'hydrures précité permet un stockage plus sécuritaire, avec un encombrement volumique plus réduit, et, généralement, un coût plus faible, notamment en termes énergétiques. En outre, l'hydrogène libéré à partir d'hydrures présente l'avantage d'être sous une forme particulièrement pure, ce qui le rend notamment adapté à une mise en oeuvre dans des dispositifs de type piles à combustible ou bien dans des réactions de chimie fine, où on cherche à s'affranchir au maximum de la présence d'impuretés.

A titre de composés métalliques capables d'assurer un stockage d'hydrogène sous forme d'hydrures, il a notamment été décrit l'emploi de matériaux ayant une structure cristalline de type AB₂ (tels que ZrCr₂), ou bien encore à base d'alliages de type FeTi ou LaNi₅ (à ce sujet, on pourra notamment de référer à l'ouvrage précité *Hydrogen in Intermetallic Compounds I et II).* Ces matériaux ont toutefois un intérêt limité. En effet, bien que conduisant aux avantages précités, ils ont des performances médiocres, notamment en termes de capacité de stockage réversible. En particulier, l'alliage FeTi est certes relativement peu coûteux, mais il présente une capacité de stockage réversible faible (de l'ordre de 1% massique), ce qui conduit à ne l'utiliser que très ponctuellement, pour des applications lourdes (par exemple dans les sous-marins). Les alliages LaNi₅ ont quant à eux des coûts de fabrication beaucoup plus élevés avec une capacité de stockage réversible qui reste réduite (généralement tout au plus de l'ordre de 1,4 % en masse). Quant aux matériaux ayant une structure cristalline de type AB₂, ils possèdent des performances de stockage réversible qui demeurent généralement inférieures à 1,8% en masse, avec en outre, le plus souvent, des problèmes de stabilité au bout de quelques cycles de charge et de décharge d'hydrogène.

De façon plus intéressante, pour réaliser un stockage réversible d'hydrogène sous forme d'hydrures, il a été proposé d'utiliser des alliages ayant une structure cristalline cubique centrée (désignés ci-après par *"alliages C.C."*)*,* par exemples des alliages de formule générale TiVCr ou TiVMn. De tels alliages C.C. et leur utilisation pour le stockage d'hydrogène ont notamment été décrits par S. W. Cho, C. S. Han, C. N. Park, E. Akiba, dans J. Alloys Comp., vol. 294, p. 288, (1999), ou par T. Tamura, M. Hatakeyama, T. Ebinuma, A. Kamegawa, H. Takamura, M. Okada, dans J. Alloys Comp., vol 505, pp. 356-357 (2003). Les alliages C.C. permettent typiquement de stocker l'hydrogène avec une capacité de stockage réversible pouvant atteindre des valeurs de l'ordre de 2,5% en masse, voire plus. En outre, ces alliages C.C. restent généralement efficaces après plusieurs cycles de charge et de décharge. De plus, les conditions d'utilisation des alliages C.C. sont particulièrement avantageuses, dans la mesure où la charge et la décharge de ces matériaux peut s'effectuer à des températures comprises entre la température ambiante (typiquement 15 à 25°C) et 100°C, et ce sans avoir à utiliser des pressions d'hydrogène supérieures à 1 MPa, ce qui en fait des matériaux de choix pour le stockage d'hydrogène.

Néanmoins, malgré ces différents avantages, les alliages C.C. présentent généralement une relativement faible réactivité, avec des cinétiques réduites de charge et de décharge de l'hydrogène. Ainsi, typiquement, on observe qu'un lingot massif d'un alliage C.C. d'un volume de 2 cm³ absorbe tout au plus de l'ordre de 0,1% en masse d'hydrogène même lorsqu'il est placé sous pression élevée d'hydrogène et à des températures importantes, par exemple à 3MPa et à 250°C pendant 3 jours. Pour atteindre les capacités de stockage réversibles précitées, de l'ordre de 2,5 % en masse ou plus, il est nécessaire d'utiliser l'alliage C.C. sous une forme présentant une surface spécifique suffisante, susceptible de permettre un échange satisfaisant entre l'alliage et l'hydrogène à stocker.

A cet effet, on procède en général à un broyage mécanique préalable des alliages de structure cristalline cubique centrée, avant leur mise en contact avec l'hydrogène. Outre le fait qu'il s'avère coûteux, à la fois en temps et en énergie, un tel broyage mécanique s'avère très difficile à mettre en oeuvre compte tenu de la résistance mécanique particulièrement élevée que présentent généralement les alliages de structure cristalline cubique centrée. En fait, un tel broyage mécanique permet uniquement d'obtenir des poudres grossières, sauf à utiliser des conditions particulièrement poussées et onéreuses de type des techniques de broyage à boulets (*ball milling*) ou d'hypertrempe sur roue (*melt spinning*), qui sont incompatibles avec une préparation quantitative d'alliage raisonnablement exploitable à l'échelle industrielle. Ainsi, les poudres obtenues selon les techniques de broyage applicables à l'échelle industrielle ont typiquement, au mieux, une granulométrie de l'ordre de 300µm à 500µm.

Cette granulométrie s'avère insatisfaisante pour assurer une incorporation véritablement efficace d'hydrogène, et une activation ultérieure du matériau est le plus souvent requise, notamment pour améliorer encore la surface spécifique. Cette activation met généralement en oeuvre un traitement de l'alliage à des températures élevées. Typiquement, il est préconisé de soumettre la poudre à un prétraitement d'activation, par exemple selon une méthode du type de celles décrite par Cho et al. dans J. Alloys Comp. vol. 45, pp. 365-357, (2002), qui consiste à soumettre la poudre aux conditions suivantes :
- traitement sous vide secondaire à 500°C pendant 1 heure ;
- refroidissement à température ambiante ;
- mise sous pression de 5MPa d'hydrogène pendant 1 heure ;
- répétition des étapes précédentes au moins trois fois ; et
- mise sous vide finale à 500°C pour une heure.
La nécessité d'un tel prétraitement de la poudre alourdit encore le procédé de stockage, ce qui se traduit notamment en termes de coûts.

WO 00/13244 A1 décrit l'hydrogénation d'un alliage ayant la composition V₅Ti₉Zr₂₇Ni₃₈Cr₅Mn₁₆ ayant des phases C14 (hexagonales) et C15 (FCC). Cette méthode permet de former une poudre d'un alliage pour le stockage de l'hydrogène sans besoin de traitement mécanique supplémentaire.

Un but de la présente invention est de fournir un matériau de stockage d'hydrogène, qui soit au moins aussi efficace, et de préférence plus efficace, que les poudres d'alliages C.C. prétraitées du type précités, et qui soit en outre accessible selon un mode de synthèse moins onéreux et plus simple que les procédés de préparation des poudres d'alliages C.C. actuellement connues.

Dans ce cadre, l'invention vise en particulier à fournir un procédé exploitable industriellement, qui permette d'obtenir directement et simplement un matériau efficace pour le stockage d'hydrogène sans avoir à mettre en oeuvre les étapes de prétraitement nécessaires à l'obtention des poudres d'alliages C.C. réactives actuellement connues.

A cet effet, selon un premier aspect, la présente invention fournit un procédé spécifique, permettant la préparation d'un matériau pulvérulent adapté au stockage de l'hydrogène. Plus précisément, ce procédé comprend les étapes suivantes :
(A) la préparation d'un matériau métallique composite, par co-fusion, puis refroidissement, des mélanges métalliques suivants :
   - un premier mélange métallique (m1), qui est :
      - un alliage (a1), de structure cristalline cubique centrée, à base de titane (Ti), vanadium (V), et d'un autre métal M choisi parmi le chrome (Cr), le manganèse (Mn), et les mélanges de ces métaux ; et
   - un deuxième mélange (m2), qui est :
      - un alliage (a2), comprenant :
         de 38 à 42% en mole d'un premier métal M¹ choisi parmi le zirconium (Zr), le niobium (Nb), le molybdène (Mo), le hafnium (Hf), le tantale (Ta), le tungstène (W), et les mélanges de ces métaux; et de 56 à 60% en mole d'un deuxième métal M², choisi parmi le nickel (Ni), le cuivre (Cu), et les mélanges de ces métaux;
   avec un rapport massique (m2)/(m1+m2) allant de 0,1% à 20% en masse dans l'étape de co-fusion ; ledit matériaux composite obtenu suite à l'étape de co-fusion présentant :
   - une phase majoritaire à base de titane, vanadium et de chrome et/ou manganèse, dispersée sous forme de grains, cette phase ayant une structure cristalline cubique centrée ; et
   - au moins une phase intergranulaire à base d'un premier métal choisi parmi le zirconium, le niobium, le molybdène, le hafnium, le tantale, le tungstène, ou bien d'un mélange de ces métaux; et d'un deuxième métal, choisi parmi le nickel le cuivre, ou bien mélange de ces métaux,
   et
(B) une hydrogénation du matériau métallique composite obtenu, permettant la conversion d'au moins une partie des métaux présents en hydrures métalliques, et conduisant à une fragmentation du matériau sous la forme d'une poudre.

La présente divulgation décrit un procédé spécifique, permettant la préparation d'un matériau pulvérulent adapté au stockage de l'hydrogène. Plus précisément, ce procédé comprend les étapes suivantes :
(A) la préparation d'un matériau métallique composite, par co-fusion, puis refroidissement, des mélanges métalliques suivants :
   - un premier mélange métallique (m1), qui est :
      - un alliage (a1), de structure cristalline cubique centrée, à base de titane (Ti), vanadium (V), et d'un autre métal M choisi parmi le chrome (Cr), le manganèse (Mn), et les mélanges de ces métaux ; ou bien
      - un mélange des métaux constitutifs dudit alliage (a1), dans les proportions dudit alliage, ces métaux étant présents dans le mélange à l'état de métaux isolés et/ou d'alliages métalliques ; et
   - un deuxième mélange (m2), qui est :
      - un alliage (a2), comprenant :
         de 38 à 42% en mole d'un premier métal M¹ choisi parmi le zirconium (Zr), le niobium (Nb), le molybdène (Mo), le hafnium (Hf), le tantale (Ta), le tungstène (W), et les mélanges de ces métaux; et de 56 à 60% en mole d'un deuxième métal M², choisi parmi le nickel (Ni), le cuivre (Cu), et les mélanges de ces métaux; ou bien
      - un mélange des métaux constitutifs dudit alliage (a2), dans les proportions dudit alliage, ces métaux étant présents dans le mélange à l'état de métaux isolés et/ou d'alliages métalliques ;
   avec un rapport massique (m2)/(m1+m2) allant de 0,1% à 20% en masse dans l'étape de co-fusion ; et
(B) une hydrogénation du matériau métallique composite obtenu, permettant la conversion d'au moins une partie des métaux présents en hydrures métalliques, et conduisant à une fragmentation du matériau sous la forme d'une poudre.

Au sens où il est employé dans la divulgation, le terme "mélange métallique", désigne, de façon très générale, une composition ou une association de compositions comprenant au moins deux éléments métalliques à leur degré d'oxydation 0, ces éléments métalliques étant présents à l'état de métaux isolés et/ou sous forme d'alliages. Un tel mélange métallique ne comprend pas nécessairement les différents métaux et/ou alliages à l'état intimement mêlés. Ainsi, selon un mode de réalisation envisageable, les métaux et/ou alliages d'un mélange métallique selon l'invention peuvent comprendre une simple association d'un premier métal ou alliage et d'un deuxième métal ou alliage, sous forme de lots distincts, par exemple sous formes de blocs physiquement distincts. Néanmoins, on préfère le plus souvent que les métaux et/ou alliages métalliques présents dans les mélanges (m1) et (m2) soient mis en oeuvre sous une forme divisée, par exemple à l'état concassé, voire à l'état de poudre plus fine, ce qui permet d'atteindre plus rapidement une bonne homogénéisation lors de la co-fusion de l'étape (A).

Au sens où il est employé dans l'invention, le terme "mélange métallique", désigne, de façon très générale, une composition ou une association de compositions comprenant au moins deux éléments métalliques à leur degré d'oxydation 0, ces éléments métalliques étant présents sous forme d'alliages. Un tel mélange métallique ne comprend pas nécessairement les différents alliages à l'état intimement mêlés. Ainsi, selon un mode de réalisation envisageable, les alliages d'un mélange métallique selon l'invention peuvent comprendre une simple association d'un premier alliage et d'un deuxième alliage, sous forme de lots distincts, par exemple sous formes de blocs physiquement distincts. Néanmoins, on préfère le plus souvent que les alliages métalliques présents dans les mélanges (m1) et (m2) soient mis en oeuvre sous une forme divisée, par exemple à l'état concassé, voire à l'état de poudre plus fine, ce qui permet d'atteindre plus rapidement une bonne homogénéisation lors de la co-fusion de l'étape (A).

Dans le procédé de la divulgation, les mélanges (m1) et (m2) mis en oeuvre peuvent être des alliages (a1) et (a2), ou bien des associations de métaux et/ou d'alliages ayant globalement la même composition que ces alliages.

Dans le procédé de l'invention, les mélanges (m1) et (m2) mis en oeuvre sont des alliages (a1) et (a2).

Au sens de la présente description, on entend par "alliage métallique" une composition, monophasique ou polyphasique, à base de plusieurs éléments métalliques à leur degré d'oxydation 0, telle qu'on l'obtient après une fusion conjointe de ces métaux. Outre ces éléments métalliques, un alliage selon l'invention peut éventuellement contenir d'autres espèces minoritaire (souvent dans des phases distinctes minoritaires dans l'alliage), telles que des éléments non métalliques (C, S, O, N ou B, par exemple) ou bien encore des éléments métalliques à l'état oxydé, ces espèces minoritaires éventuelles étant alors présentes de préférence à raison de moins de 5% en masse, préférentiellement à raison de moins de 2% en masse, et plus avantageusement à raison de moins de 1% en masse par rapport à la masse totale de l'alliage considéré.

Plus précisément, les alliages (a1) et (a2) utiles selon l'invention présentent les caractéristiques spécifiques ci-après.

Le premier alliage (a1) a une structure cristalline cubique centrée. Selon les cas de figures, cet alliage peut être monophasique (alliage de type composé intermétallique défini), ou bien polyphasique. Il s'agit en tout état de cause d'un alliage *"à base de titane, vanadium et d'un autre métal M* (Cr et/ou Mn)". On entend par ce terme que l'alliage (a1) contient, entre autres éléments possibles, du titane, du vanadium et du métal M (Cr et/ou Mn), à l'état d'oxydation 0. Ces éléments métalliques (Ti, V et le métal M) sont généralement majoritaires (en masse et en mole) dans l'alliage (a1), où ils représentent en général au moins 90%, le plus souvent au moins 95%, typiquement au moins 98%, voire 99% en masse de l'alliage (a1). En plus de ces constituants métalliques majoritaires, l'alliage (a1) peut éventuellement contenir d'autres éléments métalliques, notamment du fer (Fe), du cobalt (Co) ou du nickel (Ni).

Selon un mode de réalisation intéressant, l'alliage (a1) répond à la formule générale (I) ci-dessous :

**TiₐV_{b}M_{c}M'_{d}** **(I)**

dans laquelle :
M a la signification précitée, et désigne de préférence le chrome (Cr), ou bien un mélange de chrome et de manganèse avantageusement majoritaire (en mole) en manganèse ;
M' designe un métal ou un mélange de métaux, autre(s) que Ti, V ou Cr, par exemple choisi parmi le fer, le cobalt, le nickel, ou les mélanges de ces métaux ;
a est un nombre allant de 0,05 à 2,5, typiquement entre 0,1 et 2, par exemple entre 0,2 et 1,5 ;
b est un nombre allant de 0,05 à 2,9 , typiquement entre 0,1 et 2,2 ;
c est un nombre allant de 0,05 à 2,9 , typiquement entre 0,5 et 2,5 ; et
d, éventuellement nul, est un nombre allant de 0 à 0,5 , ce nombre étant de préférence inférieur à 0,2 , par exemple inférieur à 0,1 ,
la somme (a+b+c+d) étant égale à 3.

Plus spécifiquement, il se révèle intéressant d'utiliser un alliage (a1) répondant à la formule générale (la) ci-dessous :

**TiₓV_{y}Cr_{3-(x+y)}** **(Ia)**

dans laquelle :
x est un nombre allant de 0,4 à 1 , typiquement supérieur ou égal à 0,5 ; et
y est un nombre allant de 0,1 à 2,5, typiquement entre 0,5 et 2,2 , par exemple entre 0,6 et 2 ,
la somme (x+y) étant typiquement supérieure à 1,5 , et généralement inférieure à 2,5.

A titre d'exemples d'alliages particulièrement adaptés comme alliage (a1) selon l'invention, on peut citer, de façon non limitative, les alliages répondant aux formules générales suivantes :

**TiV_{0,8}Cr_{1,2}**

**Ti_{0,9}V_{0,7}Cr_{1,4}**

**Ti_{0,833}V_{0,826}Cr_{1,334}**

**Ti_{0,7}V_{0,9}Cr_{1,4}**

**Ti_{0,66}VCr_{1,33}**

**Ti_{0.5}V_{1.9}Cr_{0,6}.**

Quelle que soit sa composition exacte, un alliage (a1) du type précité peut être préparé selon des moyens connus en soi. En général, un tel alliage est préparé par fusion d'un mélange comprenant, entre autres, du titane, du vanadium et du chrome et/ou manganèse (typiquement à des température de l'ordre de 1300 à 1700°C). Cette fusion est typiquement conduite par induction, le plus souvent sous une atmosphère de gaz neutre (de l'argon par exemple), notamment pour éviter une oxydation de l'alliage.

Le deuxième alliage (a2) est quant à lui un alliage métallique, monophasique ou polyphasique, à base des métaux M¹ et M² précités, ce qui signifie, là encore, que l'alliage (a2) contient, entre autres, lesdits métaux M¹ et M², à l'état d'oxydation 0, généralement à titre d'éléments majoritaires (en masse et en mole), ces métaux M¹ et M² étant le plus souvent présents à raison d'une quantité totale représentant au moins 90%, généralement au moins 95%, typiquement au moins 98%, voire 99% de la masse totale de l'alliage (a2). L'alliage (a2) peut éventuellement contenir d'autres éléments, notamment des éléments métalliques tels que le cobalt, de préférence à raison de moins de 5 % en masse par rapport à la masse totale de l'alliage (a2).

Avantageusement, l'alliage (a2) comprend au moins une phase à base d'un composé de structure cristalline correspondant au groupe d'espace Aba2 ou C2ca. Dans ce cadre, l'alliage (a2) est de préférence un alliage sensiblement monophasique, essentiellement constitué (à savoir typiquement à raison d'au moins 95%, voire d'au moins 98% et plus avantageusement d'au moins 99% en volume) par un tel composé cristallin de structure Aba2 ou C2ca.

Selon un mode de réalisation particulier, l'alliage (a2) répond à la formule (II) ci-dessous :

**M¹₇₋ₘM²₁₀₋ₙM³ₚ** **(II)**

dans laquelle :
- M¹ désigne un premier métal, choisi parmi le zirconium (Zr), le niobium (Nb), le molybdène (Mo), le hafnium (Hf), le tantale (Ta), le tungstène (W), et les mélanges de ces métaux, M¹ étant de préférence Zr;
- M² désigne un deuxième métal, choisi parmi le nickel (Ni), le cuivre (Cu), et les mélanges de ces métaux, M² désignant de préférence Ni ;
- M³ désigne un métal ou un mélange de métaux, éventuellement présent dans l'alliage, distinct de M¹ et M² ;
- m est un nombre positif, négatif, ou nul, allant de -0,1 à +0,1 ;
- n est un nombre positif, négatif, ou nul, allant de -0,1 à +0,1 ;
- p est un nombre positif, ou nul, allant de 0 à 0,2.

Plus préférentiellement, l'alliage (a2) répond à la formule (IIa) ci-dessous :

M¹₇M²₁₀ (IIa)

dans laquelle M¹ et M² sont tels que définis précédemment.

Dans ce cadre, l'alliage (a2) répond avantageusement à la formule suivante

Zr₇Ni₁₀

Quelle que soit sa composition, l'alliage (a2) peut être préparé de façon analogue à l'alliage (a1), typiquement par fusion conjointe de ses éléments constitutifs, en général entre 1100°C et 0°C, le plus souvent par induction, avantageusement sous une atmosphère d'un gaz neutre, tel que l'argon, notamment pour éviter une oxydation de l'alliage.

Dans le procédé de la divulgation, on réalise la co-fusion des alliages (a1) et (a2) précités, ou, plus généralement, de mélanges métalliques (m1) et (m2), comprenant les éléments métalliques de ces alliages dans les proportions desdits alliages (a1) et (a2), avec un rapport massique (m2)/(m1+m2) compris entre 0,1 et 20%.

Dans le procédé de l'invention, on réalise la co-fusion des alliages (a1) et (a2) précités, qui correspondent respectivement aux mélanges métalliques (m1) et (m2), avec un rapport massique (m2)/(m1+m2) compris entre 0,1 et 20%.

Les inventeurs ont maintenant mis en évidence que cette co-fusion des mélanges métalliques (m1) et (m2), dans le rapport massique précité, conduit, après refroidissement, à un matériau métallique composite très spécifique, qui présente une propriété originale, à savoir celle de se fragmenter lorsqu'il est soumis à une hydrogénation (phénomène dit de "décrépitation" à l'hydrogène). Cette fragmentation conduit à l'obtention d'un matériau pulvérulent adapté au stockage d'hydrogène.

De façon surprenante, il s'avère que la fragmentation du matériau sous forme de poudre s'opère d'elle-même lors de l'étape (B), c'est-à-dire simplement en opérant une hydrogénation du matériau, et sans nécessiter aucune étape additionnelle. Ainsi, la mise en oeuvre des étape (A) et (B) permet d'obtenir directement un matériau adapté au stockage de l'hydrogène sans avoir à employer les étapes coûteuses de broyage et de prétraitement qui sont actuellement nécessaires pour la préparation de matériaux de stockage performants.

Le procédé de l'invention se révèle de ce fait particulièrement bien adapté à une mise en oeuvre à l'échelle industrielle, et ce d'autant plus que ses étapes sont conduites en employant des techniques conventionnelles de fusion et d'hydrogénation, du type de celles classiquement mises en oeuvre dans le domaine de la fabrication industrielle des matériaux de stockage d'hydrogène.

Le matériau métallique composite qui est obtenu à l'issue de l'étape (A) du procédé de l'invention possède une structure bi- ou multiphasique très spécifique, généralement fine et homogène, qui comprend :
- un premier mélange métallique (m1), qui est:un alliage (a1), de structure cristalline cubique centrée, à base de titane, vanadium, et d'un autre métal M choisi parmi le chrome, le manganèse, et les mélanges de ces métaux ; et
- un deuxième mélange (m2), qui est :un alliage (a2), comprenant :de 38 à 42% en mole d'un premier métal M1 choisi parmi le zirconium, le niobium, le molybdène, le hafnium, le tantale, le tungstène, et les mélanges de ces métaux; etde 56 à 60% en mole d'un deuxième métal M2, choisi parmi le nickel, le cuivre,et les mélanges de ces métaux;
avec un rapport massique (m2)/(m1 +m2) allant de 0,1% à 20% en masse,
ledit matériaux composite présentant :
- une phase majoritaire à base de titane, vanadium et de chrome et/ou manganèse, dispersée sous forme de grains ayant typiquement des dimensions comprises entre 10 et 100 microns, notamment entre 20 et 80 microns, par exemple entre 40 et 50 microns, cette phase majoritaire ayant une structure cristalline cubique centrée ; et
- au moins une phase intergranulaire à base d'un premier métal choisi parmi le zirconium, le niobium, le molybdène, le hafnium, le tantale, le tungstène, ou bien d'un mélange de ces métaux ; et d'un deuxième métal, choisi parmi le nickel, le cuivre, ou bien mélange de ces métaux.

Dans ce matériau composite spécifique, les grains de phase majoritaire sont dispersés au sein d'un milieu intergranulaire comprenant une ou plusieurs phases. Ainsi, la ou les phase(s) intergranulaire(s) forment des parois entre les grains dispersés. Ces parois ont en général une épaisseur moyenne de l'ordre de quelques microns (typiquement entre 1 et 5 microns).

Le matériau composite précité, obtenu de façon intermédiaire dans le procédé de l'invention, est un matériau de structure originale, non décrit jusqu'à présent à la connaissance des inventeurs, qui constitue, selon un aspect particulier, un autre objet de la présente invention.

Dans ce matériau composite, la phase majoritaire (ou phase *"intragranulaire"*) a généralement une composition relativement proche de celle de l'alliage (a1) initial. La ou les phases intergranulaire(s) sont quant à elles, le plus souvent, à base des métaux constitutifs de l'alliage (a2). Néanmoins, il est à noter que la co-fusion de l'étape (A) peut induire des phénomènes de diffusion de certains atomes entre les alliages, ce par quoi les compositions des phases intragranulaire et intergranulaire(s) peuvent s'écarter en une assez large mesure des compositions initiales des alliages (a1) et (a2). De même, la structure cristalline des phases intragranulaire et intergranulaire(s) peut différer de celles des alliages de départ. Cependant, la phase majoritaire intragranulaire du matériau composite conserve systématiquement la structure cristalline cubique centrée de l'alliage (a1) de départ.

Le phénomène de décrépitation du matériau composite qui a été observé par le inventeurs, et qui est mis à profit dans l'étape (B) du procédé, semble s'expliquer par le fait que les phases intergranulaires des matériaux composites obtenus selon l'étape (A) sont mécaniquement moins résistantes et plus réactives à l'hydrogénation que la phase majoritaire intragranulaire, de structure cubique centrée. Il semble de ce fait que l'hydrogénation du matériau soit plus effective au niveau des phases intergranulaires qu'au niveau de la phase intragranulaire, ce qui induit de très fortes contraintes mécaniques au sein du matériau composite, fragilisant en conséquence les phases intergranulaires, et conduisant *in fine* à la fragmentation observée. En d'autres termes, on peut schématiquement considérer que l'hydrogénation de l'étape (B) conduit à une désolidarisation des grains de phase majoritaire hydrogénée, l'hydrogénation du matériau induisant une fragilisation de la phase intergranulaire telle que celle-ci n'est plus à même d'assurer un rôle de liant des grains.

Le matériau pulvérulent qui est obtenu à l'issue de la décrépitation par l'hydrogène de l'étape (B) comprend donc, en général, des grains de phase majoritaire hydrogénée, essentiellement désolidarisés les uns des autres, et qui sont recouverts, en tout ou partie, par de la phase intergranulaire hydrogénée. Dans le cas le plus général, la granulométrie de la poudre obtenue à l'issue de l'étape (B) correspond donc sensiblement à la taille moyenne des grains de la phase majoritaire du matériau composite issu de l'étape (A), c'est-à-dire une granulométrie de l'ordre d'une dizaine de microns, typiquement de l'ordre de 40 à 50 microns. Ainsi, de façon tout à fait inattendue, les inventeurs ont maintenant mis en évidence qu'on peut obtenir des matériaux de stockage d'hydrogène sous forme de poudres de granulométrie beaucoup plus fine que celles issues des broyages usuels des alliages C.C de façon extrêmement simple, et, étonnamment, sans qu'aucune étape de broyage ne s'avère nécessaire.

La granulométrie des poudres obtenue à l'issue de l'étape (B) du procédé de l'invention se révèle particulièrement intéressante. En effet, outre le fait qu'elle induit une grande surface spécifique optimisant les échanges entre l'hydrogène et le matériau de stockage, cette granulométrie particulière se révèle à la fois suffisamment faible pour permettre une bonne diffusion de l'hydrogène dans le matériau (des granulométrie plus élevées impliquerait des particules plus volumineuses où cette diffusion serait ralentie), et néanmoins suffisamment élevée pour inhiber la corrosion et les phénomènes pyrophoriques auxquelles des particules de plus faible taille seraient sensibles. Il est tout à fait surprenant que le procédé de l'invention permette d'accéder directement à une telle optimisation de la taille des particules.

En outre, les travaux des inventeurs ont permis de mettre en évidence que les matériaux composites tel qu'obtenus à l'issue de l'étape (A) du procédé de l'invention se comportent de façon très particulière lors de l'hydrogénation de l'étape (B), ce qui leur confère des propriétés améliorées par rapport à des alliages monophasiques de structure cubique centrée, notamment en termes de capacité massique de stockage réversible d'hydrogène, de réactivité, de cinétique de charge et de décharge.

Ces propriétés améliorées s'expliquent au moins en partie par la présence des phases intergranulaires, qui optimisent les propriétés d'absorption des alliages de structure cubique centrée qui sont présents dans la phase majoritaire intragranulaire. Dans ce cadre, les travaux des inventeurs ont en particulier mis en évidence que les phases intergranulaires des matériaux composites tels qu'obtenus à l'issue de l'étape (A) possèdent une grande réactivité à l'hydrogénation, et notamment une très bonne aptitude à décomposer l'hydrogène moléculaire H₂ en hydrogène atomique, couplée à d'excellentes propriétés de diffusion de l'hydrogène atomique ainsi formé, ce qui favorise une très forte diffusion d'hydrogène autour des cellules de la phase majoritaire lors de l'hydrogénation de l'étape (B). De ce fait, le matériau composite réagit très rapidement à l'hydrogénation, et on observe en particulier une hydrogénation de la phase granulaire de structure cubique centrée qui est beaucoup plus rapide que si on utilisait uniquement cette phase réduite à l'état de poudre.

Ainsi, la phase intergranulaire des matériaux composites de l'invention assure un double rôle dans les propriétés d'absorption de l'hydrogène des matériaux obtenus selon l'invention :
- d'une part, cette phase intergranulaire est suffisamment fragile et réactive pour induire le phénomène de décrépitation de l'étape (B), ce qui conduit à l'obtention d'un matériau pulvérulent ayant une surface spécifique et une granulométrie particulièrement bien adaptées à des cycles ultérieurs de charge et de décharge d'hydrogène ; et
- d'autre part, elle constitue un excellent vecteur de l'hydrogène vers la phase intragranulaire, ce qui permet d'obtenir une hydrogénation très efficace du matériau dès la première hydrogénation.

En outre, les inventeurs ont mis en évidence que le matériau pulvérulent tel qu'obtenu à l'issue de l'étape (B) du procédé de l'invention a une capacité de stockage réversible qui reste généralement stable au cours du temps, et ce le plus souvent même après de nombreux cycles de charge et de décharge. En particulier, les matériaux de stockage d'hydrogène de la présent invention ne sont pas sujet aux phénomènes de démixtion observés avec certains alliages C.C., tels que ceux décrits par exemple par H. Itoh, H. Arashima, K ; Kubo, T. Kabutomori et K. Ohnishi dans J. Alloys Comp, vol. 404-406, pp. 417-420, (2005), pour lesquels on observe une dégradation rapide de la structure de l'alliage par séparation des éléments alliés au bout de quelques cycles de charge et de décharge, ce qui conduit alors à une perte rapide des propriétés de stockage réversible de l'hydrogène.

Au contraire, les matériaux de stockage de l'hydrogène de la présente invention restent généralement très stables au cours du temps, c'est-à-dire sans modification de leur structure affectant sensiblement leur capacité de stockage réversible. En fait, on peut noter des variations sur les 5 à 10 premiers cycles de charge et décharge (avec toutefois des pertes qui demeurent le plus souvent faibles), la capacité de stockage réversible se stabilisant sensiblement dans els cycles ultérieurs, sans perte notable de capacité, et ce le plus souvent même après 100 cycles de charges et de décharge, voire après 1000 cycles.

Dans la divulgation, on utilise avantageusement dans l'étape (A), à titre de mélanges métalliques (m1) et (m2), respectivement les alliages (a1) et (a2) eux mêmes, plutôt que d'autres mélange métalliques. Dans l'invention, on utilise dans l'étape (A), à titre de mélanges métalliques (m1) et (m2) respectivement les alliages (a1) et (a2) eux mêmes. Ce mode de réalisation permet en général une optimisation des différents avantages précités, et il conduit notamment à une granulométrie particulièrement fine et homogène pour le matériau composite issu de l'étape (A), et, de facto, pour la poudre obtenue après la décrépitation de l'étape (B). Dans le cadre de cette variante, pour optimiser encore les propriétés des matériaux préparés, on préfère partir d'alliages (a1) et (a2) les plus homogène possible. A cet effet, chacun des alliages (a1) et (a2) est avantageusement préparé par une fusion par induction de ses constituant, de préférence sous gaz inerte, typiquement par une induction à haute fréquence dans un dispositif de type creuset froid. Pour améliorer encore l'homogénéité, on peut soumettre les alliages à plusieurs fusions successives. Typiquement, trois étapes de fusion successives conduisent généralement à une homogénéisation satisfaisante.

Selon un autre mode de réalisation envisageable pour l'étape (A), on utilise, au contraire, à titre de mélanges métalliques (m1) et (m2), un unique mélange métallique (m1+m2) comprenant les différents éléments constitutifs des alliages (a1) et (a2) non alliés sous la forme desdits alliages (a1) et (a2). Ce mélange métallique (m1+m2) est avantageusement un mélange de métaux purs, qui sont généralement introduits à l'état divisé, par exemple sous forme de morceaux concassés ou de poudres. Cette deuxième variante de l'étape (A) conduit, en règle générale, à un matériau composite qui présente une structure plus grossière que celle des matériaux composites obtenus selon la variante précédente, avec souvent des propriétés moins optimisées pour le stockage de l'hydrogène. Néanmoins, cette deuxième variante est économiquement plus intéressante que la précédente. En effet, elle ne nécessite pas la mise en oeuvre des deux étapes de fusion nécessaires à la préparation des alliages (a1) et (a2), et elle permet donc de réduire à la fois le coût énergétique et la durée du procédé, ce qui en fait un mode de réalisation particulièrement adapté à une mise en oeuvre industrielle à grande échelle.

De façon plus générale, quels que soient la variante mise en oeuvre et la nature exacte des mélanges (m1) et (m2) employés, il est avantageux de conduire les étapes (A) et (B) dans les conditions exposées ci-après.

Dans l'étape (A), la co-fusion de l'alliage (a1) et de l'alliage (a2) peut être conduite selon tout moyen connu, sous réserve de porter les alliages au-delà de la température de fusion du mélange considéré, (généralement connue du diagramme de phases correspondant). Néanmoins, on préfère en général réaliser cette co-fusion par un chauffage par induction, en général par induction à haute fréquence. Cette co-fusion par induction est typiquement effectuée dans un creuset à induction, avantageusement dans un dispositif de type creuset froid, ce qui permet notamment d'assurer un brassage efficace des phases métalliques, facilitant ainsi la formation de la structure granulaire du matériau composite. Typiquement, la co-fusion de l'étape (A) est conduite à des températures de l'ordre de 1000 à 1800°C, par exemple entre 1100 et 1300°C. Par ailleurs, la co-fusion de l'étape (A) peut avantageusement être conduite en mettant en oeuvre plusieurs fusions successives. Généralement, trois étapes de fusion successives dans les gammes de température précitées conduisent à une co-fusion particulièrement bien adaptée au procédé de l'invention.

Une caractéristique importante dans l'étape (A) est le rapport massique (m2)/(m1+m2). Ce rapport, qui reflète les proportions respectives des mélanges (m1) et (m2) utilisés, détermine en partie la structure du matériau composite obtenu à l'issue de l'étape (A). Notamment pour que les effets de la présence de la phase intergranulaire soient les plus sensibles possibles dans le matériau composite obtenu, ce rapport (m2)/(m1+m2) est avantageusement d'au moins 0,5% en masse, de préférence d'au moins 1% en masse, et plus préférentiellement d'au moins 2% en masse. Néanmoins, pour obtenir des propriétés d'absorption particulièrement intéressantes, il s'avère en général préférable que le matériau soit essentiellement constitué de phase majoritaire. Dans ce cadre, on préfère le plus souvent que le rapport (m2)/(m1+m2) reste inférieur à 15% en masse, avantageusement inférieur à 10% en masse, par exemple inférieur à 8%. Ainsi, selon un mode de réalisation avantageux, le rapport (m2)/(m1+m2) dans l'étape de co-fusion est compris entre 3 et 6% en masse. Typiquement ce rapport est de l'ordre de 4% en masse.

Lorsqu'on utilise l'alliage (a2) à titre de mélange (m2) dans l'étape (A), on peut éventuellement effectuer un broyage dudit alliage (a2) préalablement à la co-fusion. Un tel broyage, bien que non requis dans le cas général, permet de doser la quantité d'alliage (a2) introduite par rapport à la masse du mélange (m1), ce qui se révèle avantageux lorsqu'on souhaite atteindre un rapport (m2)/(m1+m2) déterminé. Il est à noter que, compte tenu de la fragilité mécanique de l'alliage (a2), un broyage de cet alliage (a2) est beaucoup plus aisé à mettre en oeuvre que le broyage d'un alliage de structure cubique centrée.

En revanche, il est préférable de ne pas mettre en oeuvre une étape de broyage de l'alliage (a2) lorsqu'on celui-ci est employé à titre de mélange (m2). Dans ce cadre, il est à souligner qu'une étape de broyage de l'alliage (a2) n'est aucunement requise pour obtenir le matériau composite de l'étape (A).

L'étape (B) du procédé de l'invention peut quant à elle être conduite selon tout moyen connu en soi, sous réserve qu'elle soit mise en oeuvre dans des conditions de température et de pression suffisantes pour induire l'hydrogénation recherchée du matériau. Les conditions de température et pression requises à cet effet peuvent varier en une assez large mesure selon la nature exacte du matériau composite qui a été synthétisé dans l'étape (A). Toutefois, le plus souvent, l'étape (B) ne nécessite pas d'être conduite à une température dépassant 150°C, ni à une pression d'hydrogène plus élevée que 1 MPa. Ainsi, l'étape (B) peut le plus souvent être conduite dans des conditions d'hydrogénation douces, notamment entre 15 et 100°C, et sous une pression d'hydrogène typiquement entre 0,8 et 1 MPa. Cette hydrogénation très aisée du matériau composite constitue encore un autre avantage du procédé de la présente invention, qui se traduit en termes de coûts réduits (faible apport énergétique notamment) et de sécurité accrue (travail sous faible pression en particulier), ce qui rend le procédé particulièrement intéressant sur le plan industriel.

Selon un autre aspect, la présente invention a également pour objet les matériaux pulvérulents à base d'hydrures métalliques tels qu'obtenus à l'issue du procédé de l'invention.

Ces matériaux ont en général une granulométrie comprise entre 20 et 100 microns, de préférence entre 30 et 60 microns, par exemple entre 40 et 50 microns. La *"granulométrie"* à laquelle il est fait référence ici correspond à la taille moyenne des particules présente dans le matériau pulvérulent, telle que déterminée par granulométrie laser, typiquement au moyen d'un granulomètre de type usuel tel que le Malvern Mastersizer 2000.

Par ailleurs, les matériaux pulvérulents tels qu'obtenus selon l'invention ont typiquement une surface spécifique comprise entre 0,01 et 0,1 m²/g, le plus souvent d'au moins 0,2 m²/g.

Comme souligné plus haut, ces matériaux pulvérulents sont particulièrement adaptés pour le stockage réversible de l'hydrogène sous forme d'hydrures.

Ils présentent en effet une très haute capacité de stockage réversible de l'hydrogène, qui est le plus souvent supérieure à 2,5% en masse, voire à 3% en masse. De plus, ils ont une haute réactivité vis-à-vis de l'hydrogénation, avec une cinétique de charge et de décharge de l'hydrogène très élevée, permettant de décharger et de recharger le matériau en hydrogène en des temps extrêmement réduits, de l'ordre de quelques minutes tout au plus. De plus, ces matériaux ont une durée de vie très élevée, avec une très bonne résistance au cyclage.

En marge de ces avantages, il est également à souligner que les diagrammes PCI (Pression Composition Isotherme) des matériaux de stockage de l'invention mettent encore en lumière d'autre caractéristiques intéressantes par rapport à celles des matériaux C.C. classiquement utilisés à l'heure actuelle. Ainsi on constate notamment un plateau d'équilibre du système matériau-hydrogène plus plat que dans le cas des matériaux C.C et à une pression légèrement supérieure, ainsi qu'une hystérèse entre la courbe enregistrée lors de l'absorption de l'hydrogène et celle enregistrée lors de la désorption de l'hydrogène plus faible ce qui permet notamment la mise en oeuvre de variations de pressions et de températures réduites pour effectuer la charge et la décharge de l'hydrogène.

L'utilisation des matériaux pulvérulents de l'invention à titre de matériau de stockage réversible d'hydrogène sous la forme d'hydrure constitue encore un autre objet de la présente invention.

Dans ce cadre, les matériaux de l'invention se comportent comme des réservoirs d'où l'hydrogène peut être extrait à la demande en plaçant le matériau dans des conditions de température et de pression suffisamment faibles pour assurer la désorption d'hydrogène.

Ce mode de stockage réversible se révèle particulièrement intéressant dans les domaines nécessitant la fourniture de flux d'hydrogène particulièrement purs dans des conditions sécuritaires.

En particulier, les matériaux de l'invention peuvent avantageusement être employés à titre de réservoirs pour fournir de l'hydrogène gazeux dans les domaines suivants :
- Piles à combustibles statiques (domestiques ou industrielles)
- Piles à combustibles pour applications intégrées (portables)
- Piles à combustibles embarquées (bateaux, sous marins, véhicules lourds...)
- Moteurs thermiques (alternatifs, bobines,...)
- Chimie fine.

Dans le cadre de ces utilisation, les matériaux de stockage de l'hydrogène de l'invention sont alternativement « vidés » de leur hydrogène (à des conditions de température suffisamment faible et de pression suffisamment élevée), puis à nouveau « remplis » par de l'hydrogène (sous forme d'hydrure, à plus haute température et/ou plus faible pression). Les matériaux issus de la déshydrogénation des matériaux de l'invention, qui se présentent sous la forme de poudre sensiblement exempt d'hydrures et qui sont susceptible d'être ultérieurement réhydrogénés, constituent, selon un encore autre aspect, un objet spécifique de la présente invention.

Les caractéristiques et différents avantages de la présente invention apparaîtront de façon encore plus nette au vu des exemples illustratifs exposés ci-après.

### EXEMPLES

### Exemple 1

### Préparation de matériaux pulvérulents pour le stockage d'hydrogène

### • Etape 1.1: Préparation d'alliages à base de Ti, V et Cr (Alliages A1 ))

Différents échantillons d'alliages (désignés ci-après par "alliages A1"), de structure cubique centrée, ont été synthétisés par co-fusion de titane, vanadium et chrome, introduits en des proportions variables. Les masses respectives de métaux utilisés dans chaque cas (respectivement m_{Ti}, m_{V} et m_{Cr}) sont reportées dans le tableau 1 ci-dessous :

**Tableau 1 : Alliages A1**

| | **Formule** | **m_{Ti}** | **m_{V}** | **M_{Cr}** |
|---|---|---|---|---|
| **Alliage A1.1** | TiV_{0,8}Cr_{1,2} | 6,338 g | 5,397 g | 8,624 g |
| **Alliage A1.2** | Ti_{0,9}V_{0,7}Cr_{1,4} | 5,685 g | 4,706 g | 9,608 g |
| **Alliage A1.3** | Ti_{0,833}V_{0,826}Cr_{1,334} | 5,269 g | 5,562 g | 9,169 g |
| **Alliage A1.4** | Ti_{0,7}V_{0,9}Cr_{1,4} | 4,407 g | 9,569 g | 6,027 g |
| **Alliage A1.5** | Ti_{0,66}VCr_{1,33} | 4,165 g | 6,717 g | 9,118 g |
| **Alliage A1.6** | Ti_{0,5}V_{1,9}Cr_{0,6} | 3,150 g | 12,743 g | 4,107 g |

A titre de matières premières, on a utilisé le titane (pureté : 99,5%), le vanadium (pureté : 99,9%) et le chrome (pureté : 99,9%) sous forme de morceaux d'une taille moyenne de l'ordre de 0,5 cm³, obtenus en concassant des morceaux plus massifs issus de l'industrie métallurgique.

Pour la synthèse de chacun des alliages A1, on a réalisé la co-fusion du mélange de métaux dans un creuset à induction de type creuset froid, d'une puissance de 100 kW, à une température de 1500 à 1700°C, sous atmosphère d'argon. De façon à obtenir une composition homogène, chaque échantillon a été soumis à 3 fusions par induction successives, de 3 minutes chacune.

### • Etape 1.2 : Préparation d'un alliage Zr₇Ni₁₀ (alliage A2)

Un alliage A2 de formule Zr₇Ni₁₀ a été préparé par co-fusion de 10,430 g de zirconium (pureté : 99,9%) et 9,750 g de nickel (pureté : 99,99%), tous deux sous forme de morceaux d'une taille moyenne de l'ordre de 0,5 cm³, obtenus en concassant des morceaux plus massifs issus de l'industrie métallurgique, dans le creuset froid précité, à une température de 1100 à 1300°C, sous atmosphère d'argon. Là également, l'échantillon été soumis à 3 fusions par induction successives.

### • Etape 1.3 : Co-fusion des alliages

On a réalisé la co-fusion de chacun des alliages A1 synthétisés dans l'étape 1.1 avec l'alliage A2 de l'étape 1.2, avec, à chaque fois, un rapport massique A2/(A1+A2) égal à 4%. A cet effet, on a utilisé, dans chacun des cas, 30g d'alliage de type (a1) et de 1,2 g d'alliage Zr₇Ni₁₀.

La co-fusion du mélange a été réalisée dans le creuset froid précité, à une température de 1200 à 1300°C, sous atmosphère d'argon. Là encore, l'échantillon été soumis à 3 fusions par induction successives, d'une durée de 3 minutes chacune.

On a ainsi obtenu les matériaux métalliques composites M1 à M6 reportés dans le tableau 2 ci-dessous :

**Tableau 2 : matériaux composites obtenus par co-fusion des alliages A1 et A2**

| **Matériau composite** | **Alliage A1 utilisé** | **Alliage A2 utilisé** | **Rapport massique A2 / (A1+A2)** |
|---|---|---|---|
| **M1** | TiV_{0,8}Cr_{1,2} | Zr₇Ni₁₀ | 4% |
| **M2** | Ti_{0,9}V_{0,7}Cr_{1,4} | Zr₇Ni₁₀ | 4% |
| **M3** | Ti_{0,833}V_{0,826}Cr_{1,334} | Zr₇Ni₁₀ | 4% |
| **M4** | Ti_{0,7}V_{0,9}Cr_{1,4} | Zr₇Ni₁₀ | 4% |
| **M5** | Ti_{0,66}VCr_{1,33} | Zr₇Ni₁₀ | 4% |
| **M6** | Ti_{0,5}V_{1,9}Cr_{0,6} | Zr₇Ni₁₀ | 4% |

Une observation des matériaux par microscopie électronique a confirmé la structure granulaire dans chacun des cas, avec des grains d'une taille de l'ordre de 40-50 microns, et une épaisseur de la phase intergranulaire de l'ordre de quelques microns. La structure cristalline des différentes phases a été établie par diffraction aux rayons X en utilisant un diffractomètre Siemens D-5000 utilisant le rayonnement de la raie K_{α} du cuivre, ce qui a confirmé la présence d'une phase intragranulaire de structure C.C. et de phases intergranulaire de type Ti₂Ni et ZrCrNi.

### • Etape 1.4 : Traitement par l'hydrogène

Chacun des matériaux M1 à M6 obtenus à l'issue de l'étape 1.3 a été soumis à une hydrogénation sous un flux d'hydrogène à une température de 20 à 40°C, à une pression de 1 MPa, pendant 30 minutes, ce par quoi on a obtenu une fragmentation du matériau sous la forme d'une poudre.

On a ainsi obtenu, à partir de chacun des matériaux M1 à M6, respectivement des poudres à base d'hydrure métalliques P1 à P6 ayant chacune une granulométrie très resserrée, centrée sur 40 microns.

### Exemple 2

### Tests de stockage réversible d'hydrogène par les matériaux de l'exemple 1

Pour mettre en évidence leurs propriétés de stockage réversible, chacune des poudres P1 à P6 préparées dans l'exemple précédent a été soumise aux conditions suivantes :
- désorption d'hydrogène par chauffage à 150°C pendant une heure sous vide primaire (10⁻⁴ Pa)
- soumission de l'échantillon ainsi obtenu à trois cycles successifs d'absorption à 50°C, 1MPa puis désorption à 250°C, 2kPa.

Les diagrammes PCI obtenus ont permis d'établir les capacités de stockage réversibles d'hydrogène suivantes (C_{H}, en % en masse):

| **Matériau** | P1 | P2 | P3 | P4 | P5 | P6 |
|---|---|---|---|---|---|---|
| **C_{H}** | 2,1% | 1,7% | 1,9% | 2,2% | 2,2% | 2,5% |

## Revendications

1. Procédé de préparation d'un matériau pulvérulent adapte au stockage d'hydrogène, comprenant les étapes suivantes :
(A) la préparation d'un matériau métallique composite, par co-fusion, puis refroidissement, des mélanges métalliques suivants :
• un premier mélange métallique (m1), qui est:
un alliage (a1), de structure cristalline cubique centrée, à base de titane, vanadium, et d'un autre métal M choisi parmi le chrome, le manganèse, et les mélanges de ces métaux ;
et
• un deuxième mélange (m2), qui est :
- un alliage (a2), comprenant :
de 38 à 42% en mole d'un premier métal M¹ choisi parmi le zirconium, le niobium, le molybdène, le hafnium, le tantale, le tungstène, et les mélanges de ces métaux; et
de 56 à 60% en mole d'un deuxième métal M², choisi parmi le nickel, le cuivre, et les mélanges de ces métaux;
avec un rapport massique (m2)/(m1 +m2) allant de 0,1 % à 20% en masse dans l'étape de co-fusion ;
ledit matériaux composite obtenu suite à l'étape de co-fusion présentant :
- une phase majoritaire à base de titane, vanadium et de chrome et/ou manganèse, dispersée sous forme de grains, cette phase ayant une structure cristalline cubique centrée ; et
- au moins une phase intergranulaire à base d'un premier métal choisi parmi le zirconium, le niobium, le molybdène, le hafnium, le tantale, le tungstène, ou bien d'un mélange de ces métaux; et d'un deuxième métal, choisi parmi le nickel le cuivre, ou bien mélange de ces métaux,
et
(B) une hydrogénation du matériau métallique composite obtenu, permettant la conversion d'au moins une partie des métaux présents en hydrures métalliques, et conduisant à une fragmentation du matériau sous la forme d'une poudre.

2. Procédé selon la revendication 1, dans lequel on utilise, à titre de mélanges (m1) et (m2), un unique mélange (m1 +m2) comprenant les différents éléments constitutifs des alliages (a1) et (a2) non alliés sous la forme desdits alliages (a1) et (a2).

3. Procédé selon l'une quelconque des revendications 1 ou 2, dans lequel l'alliage (a1) répond à la formule générale (1) ci-dessous:
TiₐV_{b}M_{c}M'_{d} (I)
dans laquelle :
M désigne Cr, Mn, ou un mélange de ces métaux ;
M' désigne un métal ou un mélange de métaux, autre(s) que Ti, V ou Cr;
a est un nombre allant de 0,05 à 2,5 ;
b est un nombre allant de 0,05 à 2,9 ;
c est un nombre allant de 0,05 à 2,9 ; et
d, éventuellement nul, est un nombre allant de 0 à 0,5 ,
la somme (a+b+c+d) étant égale à 3.

4. Procédé selon l'une quelconque des revendications 1 ou 2, dans lequel l'alliage (a1) répond à la formule générale (la) ci-dessous:
TiₓV_{y}Cr_{3-(X+y)} (Ia)
dans laquelle :
x est un nombre allant de 0,4 à 1 ; et
y est un nombre allant de 0,1 à 2,5,
où la somme (x + y) est comprise entre 1,5 et 2,5.

5. Procédé selon la revendication 4, où l'alliage (a1) répond à l'une des formules suivantes:
TiV_{0,8}Cr_{1,2}
Ti_{0,9}V_{0,7}Cr_{1,4}
Ti_{0,833}V_{0,826}Cr_{1,334}
Ti_{0,7}V_{0,9}Cr_{1,4};
Ti_{0,66}VCr_{1,33}.
ou bien
Ti_{0,5}V_{1,9}Cr_{0,6}

6. Procédé selon l'une quelconque des revendications 1 à 5, où l'alliage ·(a2) répond à la formule (II) ci-dessous:
M¹₇₋ₘM²₁₀₋ₙM³ₚ (II)
dans laquelle :
• M¹ désigne un premier métal, choisi parmi le zirconium, le niobium, le molybdène, le hafnium, le tantale, le tungstène, et les mélange de ces métaux;
• M² désigne un deuxième métal, choisi parmi le nickel, le cuivre, et les mélanges de ces métaux;
• M³ désigne un métal ou un mélange de métaux, éventuellement présent dans l'alliage, distinct de M1 et M2 ;
• m est un nombre positif, négatif, ou nul, allant de -0,1 à +0,1 ;
• n est un nombre positif, négatif, ou nul, allant de -0,1 à +0,1 ;
• p est un nombre positif, ou nul, allant de 0 à 0,2.

7. Procédé selon l'une quelconque des revendications 1 à 6, où l'alliage (a2) répond à la formule (IIa) ci-dessous:
M¹₇M²₁₀ (IIa)
où M¹ et M² sont tels que définis dans la revendication 7.

8. Procédé selon la revendication 7, où l'alliage (a2) répond à la formule suivante:
Zr₇Ni₁₀

9. Procédé selon l'une quelconque des revendications 1 à 8, où, dans la cofusion de l'étape (A), le rapport massique (m2)/(m1 +m2) est compris entre 0,5 et 15% en masse, de préférence entre 1 et 10% en masse.

10. Procédé selon l'une quelconque des revendications 1 à 8, où la co-fusion de l'étape (A) est effectuée par un chauffage par induction, avantageusement dans un creuset à induction.

11. Procédé selon l'une quelconque des revendications 1 à 10, dans lequel l'étape (B) est effectuée en traitant le matériau composite obtenu selon l'étape (A) par de l'hydrogène à une température de 15 à 100°C et sous une pression d'hydrogène comprise 0,8 et 1 MPa.

12. Matériau métallique composite susceptible d'être obtenu à l'issue de l'étape (A) du procédé de l'une quelconque des revendications 1 à 9, comprenant :
• un premier mélange métallique (m1), qui est:
un alliage (a1), de structure cristalline cubique centrée, à base de titane, vanadium, et d'un autre métal M choisi parmi le chrome, le manganèse, et les mélanges de ces métaux ;
et
• un deuxième mélange (m2), qui est :
un alliage (a2), comprenant :
de 38 à 42% en mole d'un premier métal M¹ choisi parmi le zirconium, le niobium, le molybdène, le hafnium, le tantale, le tungstène, et les mélanges de ces métaux; et
de 56 à 60% en mole d'un deuxième métal M², choisi parmi le nickel, le cuivre, et les mélanges de ces métaux;
avec un rapport massique (m2)/(m1 +m2) allant de 0,1% à 20% en masse,
ledit matériaux composite présentant :
- une phase majoritaire à base de titane, vanadium et de chrome et/ou manganèse, dispersée sous forme de grains, cette phase ayant une structure cristalline cubique centrée ; et
- au moins une phase intergranulaire à base d'un premier métal choisi parmi le zirconium, le niobium, le molybdène, le hafnium, le tantale, le tungstène, ou bien d'un mélange de ces métaux; et d'un deuxième métal, choisi parmi le nickel le cuivre, ou bien mélange de ces métaux.

13. Matériau métallique composite selon la revendication 12, où les grains ont des dimensions entre 10 et 100 microns, de préférence entre 40 et 50 microns.

14. Matériau pulvérulent à base d'hydrures métalliques susceptible d'être obtenu à l'issue du procédé de l'une quelconque des revendications 1 à 11, par hydrogénation d'un matériau métallique composite selon la revendication 12 ou 13.

15. Utilisation d'un matériau pulvérulent selon la revendication 14, à titre de matériau de stockage réversible d'hydrogène sous la forme d'hydrure.

16. Matériau pulvérulent sensiblement exempt d'hydrures, susceptible d'être obtenu par déshydrogénation d'un matériau pulvérulent selon la revendication 14.

## Patentansprüche

1. Verfahren zur Herstellung eines pulverförmigen Materials, das zur Wasserstoffspeicherung geeignet ist, umfassend die nachstehenden Schritte:
(A) Herstellen eines metallischen Verbundwerkstoffs durch Co-Fusion, anschließend Abkühlen der nachstehenden metallischen Gemische:
• ein erstes Metallgemisch (m1), das heißt:
eine Legierung (a1) mit kubisch raumzentrierter Kristallstruktur, basierend auf Titan, Vanadium und einem anderen Metall M, ausgewählt aus Chrom, Mangan und Gemischen dieser Metalle;
und
• ein zweites Gemisch (m2), das heißt:
- eine Legierung (a2), umfassend:
38 bis 42 Mol-% eines ersten Metalls M¹, ausgewählt aus Zirkonium, Niob, Molybdän, Hafnium, Tantal, Wolfram und Gemischen dieser Metalle; und
56 bis 60 Mol-% eines zweiten Metalls M², ausgewählt aus Nickel, Kupfer und Gemischen dieser Metalle;
mit einem Massenverhältnis (m2)/(m1+m2) im Bereich von 0,1 % bis 20 Masse-% im Co-Fusionsschritt;
wobei das Verbundmaterial, das nach dem Co-Fusionsschritt erhalten wurde, aufweist:
- eine Hauptphase, basierend auf Titan, Vanadium und Chrom und/oder Mangan, dispergiert in Form von Körnern, wobei diese Phase eine kubisch raumzentrierte Kristallstruktur aufweist; und
- mindestens eine interkristalline Phase, basierend auf einem ersten Metall, ausgewählt aus Zirkonium, Niob, Molybdän, Hafnium, Tantal, Wolfram oder einem Gemisch dieser Metalle; und ein zweites Metall, ausgewählt aus Nickel, Kupfer oder einem Gemisch dieser Metalle,
und
(B) Hydrierung des erhaltenen metallischen Verbundwerkstoffs, die eine Umwandlung von mindestens einem Teil der vorhandenen Metalle in Metallhydride ermöglicht und zu einer Fragmentierung des Materials in Form eines Pulvers führt.

2. Verfahren nach Anspruch 1, bei dem ein einziges Gemisch (m1 + m2), das die verschiedenen Element-Bestandteile der unlegierten Legierungen (a1) und (a2) in Form der Legierungen (a1) und (a2) umfasst, als Gemische (m1) und (m2) verwendet wird.

3. Verfahren nach einem der Ansprüche 1 oder 2, wobei die Legierung (a1) der nachstehenden allgemeinen Formel (1) entspricht:
TiₐV_{b}M_{c}M'_{d} (I)
in der:
M Cr, Mn oder ein Gemisch dieser Metalle bezeichnet;
M' ein Metall oder ein Gemisch von Metallen, die nicht Ti, V oder Cr sind, bezeichnet;
a eine Zahl im Bereich von 0,05 bis 2,5 ist;
b eine Zahl im Bereich von 0,05 bis 2,9 ist;
c eine Zahl im Bereich von 0,05 bis 2,9 ist; und
d, gegebenenfalls Null, eine Zahl von 0 bis 0,5 ist,
wobei die Summe (a+b+c+d) gleich 3 ist.

4. Verfahren nach einem der Ansprüche 1 oder 2, wobei die Legierung (a1) der nachstehenden allgemeinen Formel (la) entspricht:
TiₓV_{y}Cr_{3-(x+y)} (Ia)
in der:
x eine Zahl von 0,4 bis 1 ist; und
y eine Zahl im Bereich von 0,1 bis 2,5 ist,
wobei die Summe (x + y) zwischen 1,5 und 2,5 liegt.

5. Verfahren nach Anspruch 4, wobei die Legierung (a1) eine der nachstehenden Formeln aufweist:
TiV_{0,8}Cr_{1,2}
Ti_{0,9}V_{0,7}Cr_{1,4}
Ti_{0,833}V_{0,826}Cr_{1,334}
Ti_{0,7}V_{0,9}Cr_{1,4};
Ti_{0,66}VCr_{1,33}
oder auch
Ti_{0,5}V_{1,9}Cr_{0,6}

6. Verfahren nach einem der Ansprüche 1 bis 5, wobei die Legierung (a2) der nachstehenden Formel (II) entspricht:
M¹₇₋ₘM²₁₀₋ₙM³ₚ (II)
in der:
• M¹ ein erstes Metall bezeichnet, ausgewählt aus Zirkonium, Niob, Molybdän, Hafnium, Tantal, Wolfram und Gemischen dieser Metalle;
• M² ein zweites Metall bezeichnet, ausgewählt aus Nickel, Kupfer und Gemischen dieser Metalle;
• M³ ein Metall oder ein Gemisch von Metallen bezeichnet, die gegebenenfalls in der Legierung vorhanden sind, die sich von M¹ und M² unterscheiden;
• m eine positive, negative Zahl oder Null im Bereich von -0,1 bis +0,1 ist;
• n eine positive, negative Zahl oder Null im Bereich von -0,1 bis +0,1 ist;
• p eine positive Zahl oder Null im Bereich von 0 bis 0,2 ist.

7. Verfahren nach einem der Ansprüche 1 bis 6, wobei die Legierung (a2) der nachstehenden Formel (IIa) entspricht:
M¹₇M²₁₀ (IIa)
worin M¹ und M² wie in Anspruch 7 definiert sind.

8. Verfahren nach Anspruch 7, wobei die Legierung (a2) der nachstehenden Formel entspricht:
Zr₇Ni₁₀

9. Verfahren nach einem der Ansprüche 1 bis 8, wobei bei der Co-Fusion von Schritt (A) das Massenverhältnis (m2)/(m1 +m2) zwischen 0,5 und 15 Masse-%, vorzugsweise zwischen 1 und 10 Masse-%, liegt.

10. Verfahren nach einem der Ansprüche 1 bis 8, wobei die Co-Fusion von Schritt (A) durch Induktionserwärmung, vorzugsweise in einem Induktionstiegel, durchgeführt wird.

11. Verfahren nach einem der Ansprüche 1 bis 10, wobei Schritt (B) durchgeführt wird, indem das nach Schritt (A) erhaltene Verbundmaterial mit Wasserstoff bei einer Temperatur von 15 bis 100°C und einem Wasserstoffdruck zwischen 0,8 und 1 MPa behandelt wird.

12. Metallisches Verbundmaterial, erhältlich am Ende von Schritt (A) des Verfahrens nach einem der Ansprüche 1 bis 9, umfassend:
• ein erstes Metallgemisch (m1), das heißt:
eine Legierung (a1) mit kubisch raumzentrierter Kristallstruktur, basierend auf Titan, Vanadium und einem anderen Metall M, ausgewählt aus Chrom, Mangan und Gemischen dieser Metalle; und
• ein zweites Gemisch (m2), das heißt:
eine Legierung (a2), umfassend:
38 bis 42 Mol-% eines ersten Metalls M¹, ausgewählt aus Zirkonium, Niob, Molybdän, Hafnium, Tantal, Wolfram und Gemischen dieser Metalle; und 56 bis 60 Mol-% eines zweiten Metalls M², ausgewählt aus Nickel, Kupfer und Gemischen dieser Metalle;
mit einem Massenverhältnis (m2)/(m1 +m2) im Bereich von 0,1 bis 20 Masse-%, wobei das Verbundmaterial aufweist:
- eine Hauptphase, basierend auf Titan, Vanadium und Chrom und/oder Mangan, dispergiert in Form von Körnern, wobei diese Phase eine kubisch raumzentrierte Kristallstruktur aufweist; und
- mindestens eine interkristalline Phase, basierend auf einem ersten Metall, ausgewählt aus Zirkonium, Niob, Molybdän, Hafnium, Tantal, Wolfram oder einem Gemisch dieser Metalle; und ein zweites Metall, ausgewählt aus Nickel, Kupfer oder einem Gemisch dieser Metalle.

13. Metallverbundwerkstoff nach Anspruch 12, wobei die Körner Abmessungen zwischen 10 und 100 Mikrometer, vorzugsweise zwischen 40 und 50 Mikrometer, aufweisen.

14. Pulverförmiges Metallhydridmaterial, erhältlich durch das Verfahren nach einem der Ansprüche 1 bis 11 durch Hydrierung eines metallischen Verbundmetallmaterials nach Anspruch 12 oder 13.

15. Verwendung eines pulverförmigen Materials nach Anspruch 14 als reversibles Speichermaterial für Wasserstoff in Hydridform.

16. Pulverförmiges Material, das im Wesentlichen frei von Hydriden ist, erhältlich durch Dehydrierung eines pulverförmigen Materials nach Anspruch 14.

## Claims

1. Method for preparing a pulverulent material suitable for storing hydrogen, comprising the steps of:
(A) preparing a composite metallic material, by co-melting then cooling the following metallic mixtures:
• a first metallic mixture (m1), which is:
an alloy (a1), having a body-centred cubic crystal structure, with a titanium, vanadium and other metal M base, said other metal being chosen from the group consisting of chromium, manganese and mixtures thereof; and
• a second mixture (m2), which is:
- an alloy (a2), comprising:
38 to 42 mol% of a first metal M¹ selected from the group consisting of zirconium, niobium, molybdenum, hafnium, tantalum, tungsten, and mixtures thereof; and
56 to 60 mol% of a second metal M², selected from the group consisting of nickel, copper, and mixtures thereof;
with a weight ratio (m2)/(m1+m2) from 0.1 to 20 wt% in the co-melting step;
said composite material obtained at the end of the co-melting step having:
- a majority phase having a titanium, vanadium and chromium and/or manganese base, dispersed in the form of grains, this phase having a body-centred cubic crystal structure; and
- at least one intergranular phase having as a base a first metal selected from the group consisting of zirconium, niobium, molybdenum, hafnium, tantalum, tungsten, or a mixture thereof; and a second metal selected from the group consisting of nickel, copper, or a mixture thereof,
and
(B) hydrogenating the composite metallic material obtained, allowing the conversion of at least one part of the metals present into metal hydrides, and resulting in fragmentation of the material to powder form.

2. Method according to claim 1, wherein a single mixture (m1+m2) comprising the various component elements of the alloys (a1) and (a2), not alloyed in the form of said alloys (a1) and (a2), is used as mixtures (m1) and (m2).

3. Method according to either claim 1 or claim 2, wherein the alloy (a1) corresponds to the general formula (I) below:
TiₐV_{b}M_{c}M'_{d} (I)
wherein:
M denotes Cr, Mn, or a mixture thereof;
M' denotes a metal or a mixture of metals, other than Ti, V or Cr;
a is a number from 0.05 to 2.5;
b is a number from 0.05 to 2.9;
c is a number from 0.05 to 2.9; and
d, which can be zero, is a number from 0 to 0.5,
the sum (a+b+c+d) being equal to 3.

4. Method according to either claim 1 or claim 2, wherein the alloy (a1) corresponds to the general formula (Ia) below:
TiₓV_{y}Cr_{3-(X+y)} (Ia)
wherein:
x is a number from 0.4 to 1; and
y is a number from 0.1 to 2.5,
the sum (x+y) lying in the range of 1.5 to 2.5.

5. Method according to claim 4, wherein the alloy (a1) corresponds to one of the following formulae:
TiV_{0.8}Cr_{1.2}
Ti_{0.9}V_{0.7}Cr_{1.4}
Ti_{0.833}V_{0.826}Cr_{1.334}
Ti_{0.7}V_{0.9}Cr_{1.4}
Ti_{0.66}VCr_{1.33}
or
Ti_{0.5}V_{1.9}Cr_{0.6}

6. Method according to any of claims 1 to 5, wherein the alloy (a2) corresponds to the formula (II) below:
M¹₇₋ₘM²₁₀₋ₙM³ₚ (II)
wherein:
• M¹ denotes a first metal, selected from the group consisting of zirconium, niobium, molybdenum, hafnium, tantalum, tungsten, and mixtures thereof;
• M² denotes a second metal, selected from the group consisting of nickel, copper, and mixtures thereof;
• M³ denotes a metal or a mixture of metals, possibly present in the alloy and different from M1 and M2;
• m is a positive or negative number, or zero, from -0.1 to +0.1;
• n is a positive or negative number, or zero, from -0.1 to +0.1;
• p is a positive number, or zero, from 0 to 0.2.

7. Method according to any of claims 1 to 6, wherein the alloy (a2) corresponds to the formula (IIa) below:
M¹₇M²₁₀ (IIa)
where M¹ and M² are as defined in claim 7.

8. Method according to claim 7, wherein the alloy (a2) corresponds to the following formula:
Zr₇Ni₁₀

9. Method according to any of claims 1 to 8, wherein, in the co-melting of step (A), the weight ratio (m2)/(m1+m2) lies in the range of 0.5 to 15 wt%, preferably in the range of 1 to 10 wt%.

10. Method according to any of claims 1 to 8, wherein the co-melting of step (A) is carried out by induction heating, advantageously in an induction crucible.

11. Method according to any of claims 1 to 10, wherein step (B) is carried out by treating the composite material obtained according to step (A) with hydrogen at a temperature from 15 to 100°C and at a hydrogen pressure in the range of 0.8 to 1 MPa.

12. Composite metallic material capable of being obtained at the end of step (A) of the method of any of claims 1 to 9, comprising:
• a first metallic mixture (m1), which is:
an alloy (a1), having a body-centred cubic crystal structure, with a titanium, vanadium and other metal M base, said other metal being chosen from the group consisting of chromium, manganese and mixtures thereof; and
• a second mixture (m2), which is:
an alloy (a2), comprising:
38 to 42 mol% of a first metal M¹ selected from the group consisting of zirconium, niobium, molybdenum, hafnium, tantalum, tungsten, and mixtures thereof; and
56 to 60 mol% of a second metal M², selected from the group consisting of nickel, copper, and mixtures thereof;
with a weight ratio (m2)/(m1+m2) from 0.1 to 20 wt%,
said composite material having:
- a majority phase having a titanium, vanadium and chromium and/or manganese base, dispersed in the form of grains, this phase having a body-centred cubic crystal structure; and
- at least one intergranular phase having as a base a first metal selected from the group consisting of zirconium, niobium, molybdenum, hafnium, tantalum, tungsten, or a mixture thereof; and a second metal selected from the group consisting of nickel, copper, or a mixture thereof.

13. Composite metallic material according to claim 12, wherein the grains have dimensions of between 10 and 100 micrometres, preferably between 40 and 50 micrometres.

14. Pulverulent material with a metal hydride base that is capable of being obtained at the end of the method of any of claims 1 to 11, by the hydrogenation of a composite metallic material according to either claim 12 or claim 13.

15. Use of a pulverulent material according to claim 14, as a material for the reversible storage of hydrogen in hydride form.

16. Pulverulent material substantially free from hydrides, capable of being obtained by the dehydrogenation of a pulverulent material according to claim 14.
